# EUROPEAN PATENT SPECIFICATION

(11) **EP 2 962 912 B1**
(45) Date of publication and mention of the grant of the patent: **04.09.2019**
(21) Application number: 15173552.9
(22) Date of filing: 24.06.2015
(51) Int. Cl.: B60T 7/10, B60T 11/10, B60T 13/26, B60T 7/08, B60T 11/16

(54) **BRAKING DEVICE**
BREMSVORRICHTUNG
SYSTÈME DE FREINAGE

(30) Priority: 02.07.2014 IT MO20140190
(43) Date of publication of application: 06.01.2016
(73) Proprietor: Safim S.p.A., 41100 Modena (IT)
(72) Inventor: Garuti, Andrea, 41123 Modena (IT); Mamei, Eronne, 41123 Modena (IT); Mamei, Enrico, 41123 Modena (IT); Mamei, Andrea, 41123 Modena (IT)
(74) Representative: Brunacci, Marco

(56) References cited:
- EP-A1- 0 456 097
- EP-A1- 0 565 768
- DE-A1- 2 449 239
- DE-A1- 3 844 382
- DE-A1- 19 815 708
- FR-A1- 2 075 876
- US-A- 1 501 159
- US-A- 2 539 538
- US-A- 2 881 872

## Description

The present invention relates to a braking device.

Some recently introduced regulations require that between a towing vehicle and its trailer a connection device must be placed having a pair of male couplings able to be inserted with a pair of relative female couplings as well as the presence of an electrical connection to control the braking system of the trailer and to transmit to the towing vehicle any alarm signals from the trailer itself.

In particular, the female couplings are connectable, respectively, to a control line able to supply the braking system of the trailer, and to an additional line able to deactivate the automatic and/or parking brake of the trailer itself.

As is known to the expert in the sector, the braking phases of a vehicle are generally three, or the service braking, which occurs in normal operating conditions of the vehicle itself, the parking brake, or when the vehicle is stationary in the same position, and the emergency braking.

Such regulations also require that for the agricultural tractors which provide for the hydraulic braking of the trailer, during the emergency braking of the towing vehicle also the service braking of the trailer is activated, so as to have a gradual braking of the same.

WO 2012/095389 discloses a device for the emergency and parking braking of a vehicle, and the document EP 0 456 097 A1 discloses a pneumatic brake for unit and trailer.

The main aim of the present invention is to provide a braking device that allows to comply with the regulations by means of a solution which is constructively simple and reliable in operation.

Within this aim, one object of the present invention is to provide a single device which allows to manage both the parking brake and the emergency one. Another object of the present invention is to prevent the service braking of the trailer remaining active during the parking brake of the towing vehicle.

Yet another object of the present invention is to provide a braking device which allows to overcome the mentioned drawbacks of the prior art within the ambit of a simple, rational, easy, effective to use and affordable solution.

Other characteristics and advantages of the present invention will become better evident from the description of a preferred but not exclusive embodiment of a braking device, illustrated by way of an indicative, but non-limiting example in the accompanying drawings, in which:
Figures 1 to 3 are schematic representations of a device according to the invention in a first embodiment and in three different operating conditions;
Figure 4 shows a first hydraulic diagram comprising a device according to the invention in the first embodiment;
Figure 5 shows a second hydraulic diagram comprising a device according to the invention in the first embodiment;
Figure 6 shows a third hydraulic diagram comprising a device according to the invention, in a second embodiment;
Figure 7 shows a fourth hydraulic diagram comprising a device according to the invention, in a third embodiment;
Figure 8 shows a fifth hydraulic diagram comprising a device according to the invention, in a fourth embodiment;
Figure 9 shows a sixth hydraulic diagram comprising a device according to the invention, in a fifth embodiment;
Figure 10 shows a seventh hydraulic diagram comprising the device of Figure 9;
Figure 11 shows an eighth hydraulic diagram comprising a device according to the invention, in a sixth embodiment;
Figures 12 to 15 are schematic representations of a device according to the invention in a seventh embodiment and in three different operating conditions;
Figure 16 shows a ninth hydraulic diagram comprising a device according to the invention in the seventh embodiment;
Figures 17 to 20 are schematic representations of a device according to the invention in an eighth embodiment and in three different operating conditions;
Figure 21 shows a tenth hydraulic diagram comprising a device according to the invention in the eighth embodiment.

With particular reference to such figures, globally indicated with reference number 1 is a braking device.

The device 1 comprises a base body 2, associable with the chassis of a towing vehicle, first command means 3 associable with the parking brake 4 of a towing vehicle (not shown in the illustrations) and activatable to start the same, and second command means 5 connectable to the braking valve 6 of a trailer (not shown in the illustrations) and activatable to start the service braking of the same.

More particularly, the braking valve 6 corresponds to the so-called trailer brake valve and is able to emit a pressurized command signal for the supply of a control line 7 which can be connected to the braking system of the trailer.

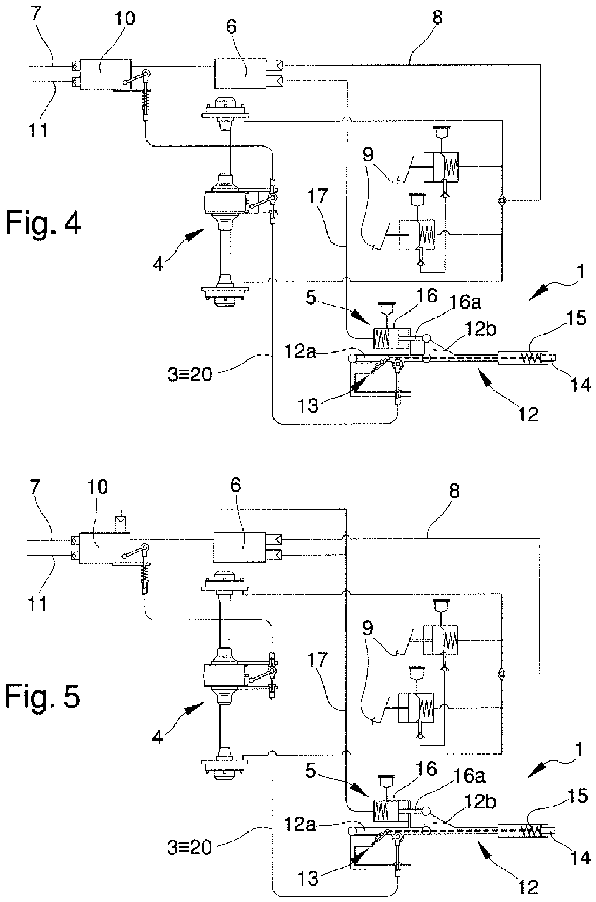

As visible from the hydraulic diagrams shown in Figures 4 to 11, the braking valve 6 is driven both by the second command means 5 and by the service braking line 8 of the towing vehicle connected to the relative brake pedals 9. Preferably, the braking valve 6 is connected in a fluid-operated manner to a multi-function valve 10, arranged downstream of the braking valve itself, able to adjust the pressure along the control line 7 and along an additional line 11 operatively connected to the automatic and/or parking brake (not shown in the illustrations) of the trailer. In particular, as long as the additional line 11 is pressurized, the automatic and/or parking brake of the trailer is deactivated, whereas when the pressure along it goes to zero the automatic and/or parking brake is activated.

The device 1 also comprises a lever 12 which has at least a first portion 12a hinged to the body 2 around a first axis X of rotation and at least a second portion 12b, which may be gripped by an operator, hinged to the first portion itself around a second axis Y of rotation.

The first portion 12a is associated with the first command means 3 and is movable between a rest position, wherein the first command means 3 are deactivated, and at least a braking position, wherein it is rotated with respect to the rest position and the first command means 3 are activated. Conveniently, the first portion 12a has a plurality of braking positions among which it moves continuously by applying a gradually increasing force on the first command means 3.

Locking means 13 of the first portion 12a are also provided in the braking position. More particularly, the locking means 13 are able to maintain the first portion 12a in the braking position reached from time to time and they can be removed by means of a special command 14 to enable the return of the first portion itself to the rest position. In the embodiments represented in the illustrations, the locking means 13 are the type of a ratchet lever and the command 14 is the type of a button operable in contrast to a spring 15 to lift the lever disengaging it from the teeth of the ratchet.

Advantageously, the first command means 3 are of the mechanical type.

More in detail, the first command means 3 comprise at least a first cable of the flexible and inextensible type, associated with the first portion 12a, which is able to bring the first cable in traction as a result of its rotation from the rest position to the braking position.

As the first portion 12a rotates around the first axis X away from the braking position, the intensity increases of the traction force applied on the cable 3.

The second portion 12b is in turn associated with the second command means 5 and is movable between a rest position, wherein the second command means themselves are deactivated, and at least a braking position, wherein it is rotated with respect to the rest position and the second command means 5 are activated so as to start the service braking of the trailer.

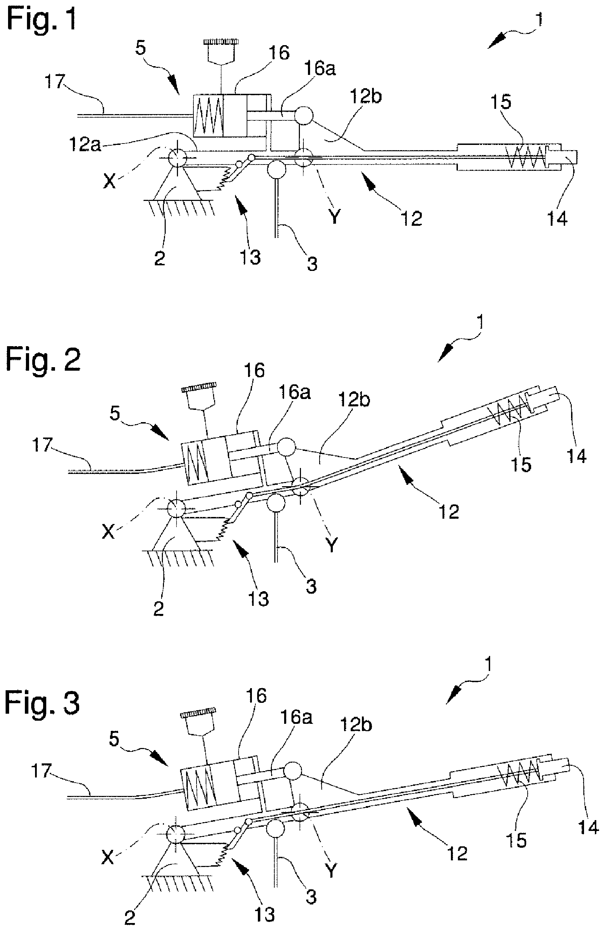

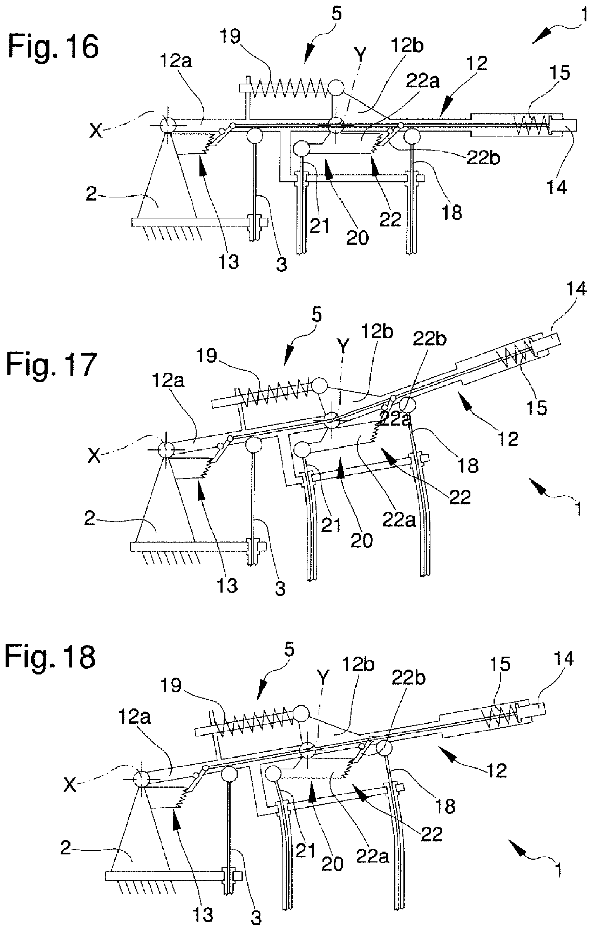

As a result of the starting of the second portion 12b, or of its lifting from the rest position, both the second portion itself and the first portion 12a move to a respective braking position by rotating around their respective axes X and Y. The rotation of the second portion 12b around the second axis Y in fact, requires the application of a force on the first portion 12a through the corresponding hinging axis, which causes the rotation thereof around the first axis X. This operating condition corresponds to an emergency condition, represented in Figures 2, 13 and 17, as a result of which both the parking brake 4 of the towing vehicle and the service braking of the trailer are activated.

As a result of the release of the second portion 12b, the latter returns to its rest position, whereas the first portion 12a remains in the braking position taken by the effect of the locking means 13. This operating condition corresponds to the parking condition, represented in Figures 3, 14 and 18, wherein the parking brake of the towing vehicle is activated and the service braking of the trailer is deactivated.

In the embodiments of the device 1 of Figures 1 to 3 and of Figures 4, 5, 6, 9 and 10, the second command means 5 are of the fluid-operated type and comprise at least a fluid-operated cylinder 16 communicating with the braking valve 6 through a piloting line 17. The second portion 12b is therefore able to move the piston 16a of the cylinder 16, to which it is hinged, as a result of its rotation around the second axis Y. As the second portion 12b rotates around its second axis Y away from the rest position, the pressure of the work fluid also increases along the piloting line 17. The pressure along the piloting line 17 and the traction force applied by the first portion 12a on the first cable 3 are therefore interrelated.

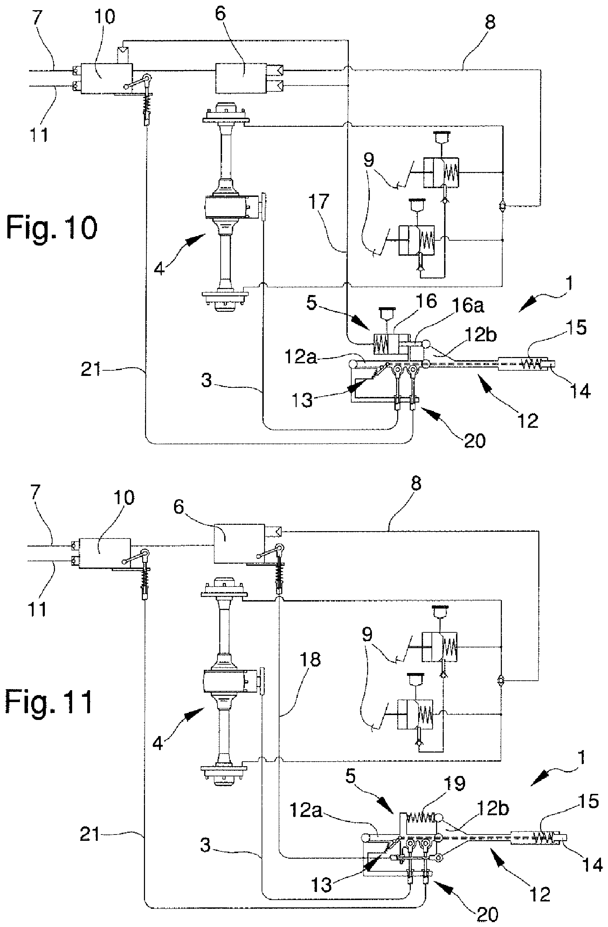

In the diagrams shown in Figures 5 and 10, the piloting line 17 is also connected to the multi-function valve 10 in order to inhibit or delay the resetting of pressure along the additional line 11.

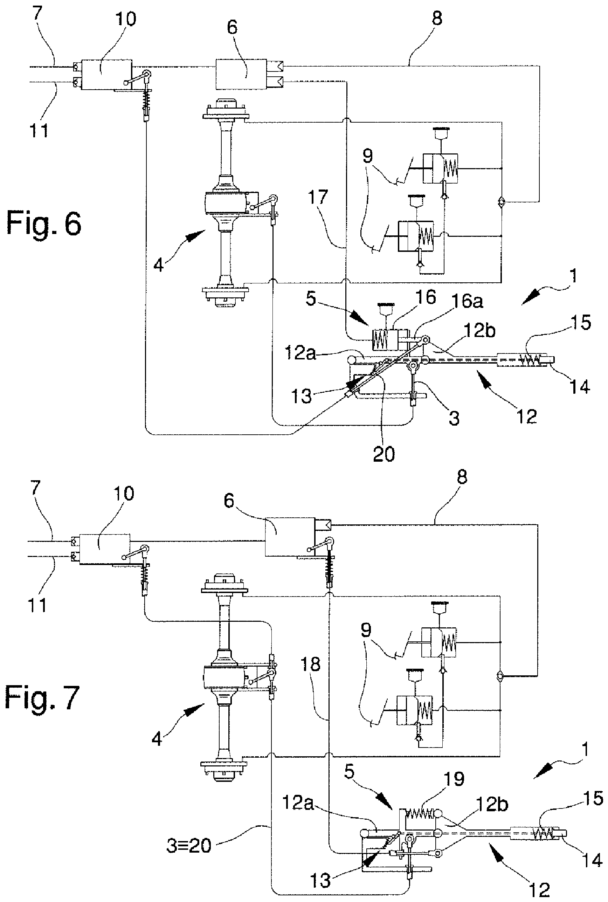

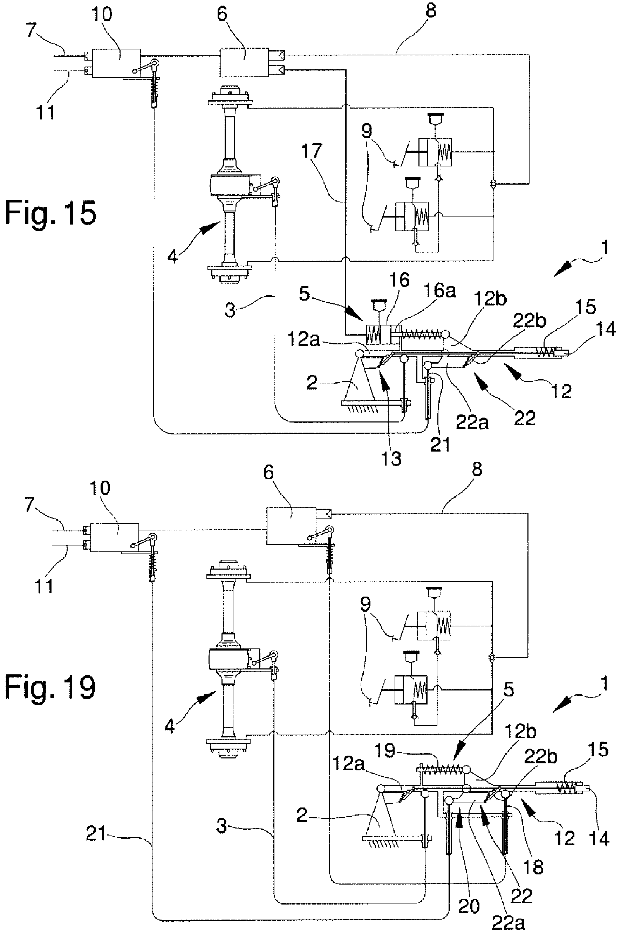

Alternatively, as shown in the embodiments of Figures 7, 8, 11 and 16-19, the second command means 5 are of the mechanical type and comprise at least a second flexible, inextensible cable 18 associated with the second portion 12b, which is able to bring the second cable 18 in traction as a result of its rotation towards the braking position, and elastic means 19 able to counteract such rotation of the second portion 12b. In this case too, as the second portion 12b rotates around its second axis Y away from the rest position, the traction force applied on the second cable 18 increases.

Advantageously, the device 1 also comprises third command means 20 connectable to the multi-function valve 10 and which can be started to reset the pressure of the work fluid along the additional line 11 so as to activate the automatic and/or parking brake of the trailer.

Conveniently, the third command means 20 are of the mechanical type and comprise at least a third flexible and inextensible cable 21 connected to the multi-function valve 10.

In the embodiments of Figures 4, 5 and 7, the third command means 20 coincide with the first command means 3.

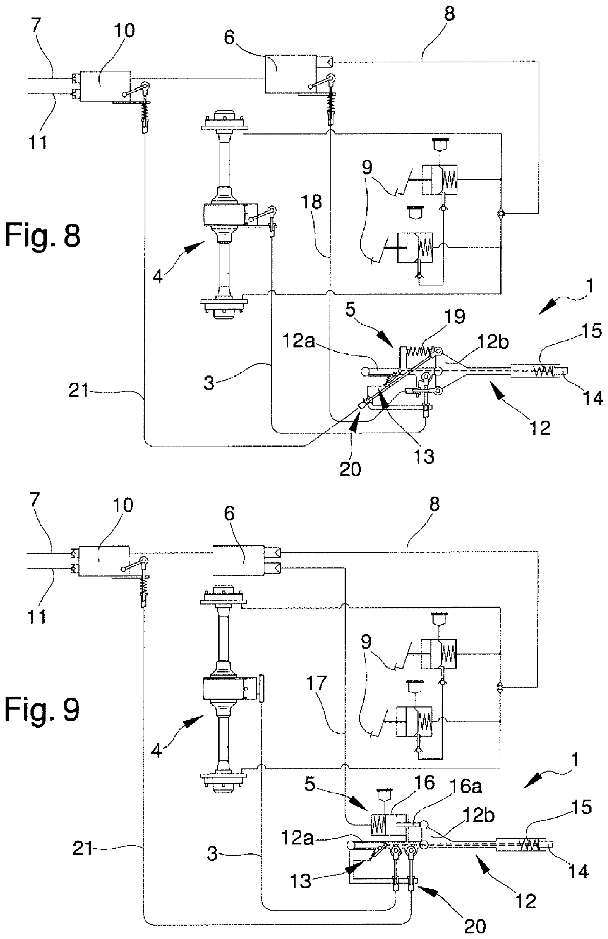

In the embodiments of Figures 9, 10 and 11, the third command means 20 are distinct from the first command means 3 and are connected to the first portion 12a which, by rotating around its first axis X, brings the third cable 21 in traction. In these embodiments, therefore, the activation of the automatic and/or parking brake of the trailer occurs substantially simultaneously with that of the parking brake 4 of the towing vehicle.

In the embodiments of Figures 6, 8 and 12-19, the third command means 20 are distinct from the first command means 3 and are connected to both the first and the second portion 12a, 12b in such a way that the third cable 21 is brought in traction as a result of the shift of the first portion 12a to a braking position and the return of the second portion 12b from the braking position to the rest position. In this way the automatic and/or parking brake of the trailer is activated with a certain delay compared to the parking brake 4 of the towing vehicle.

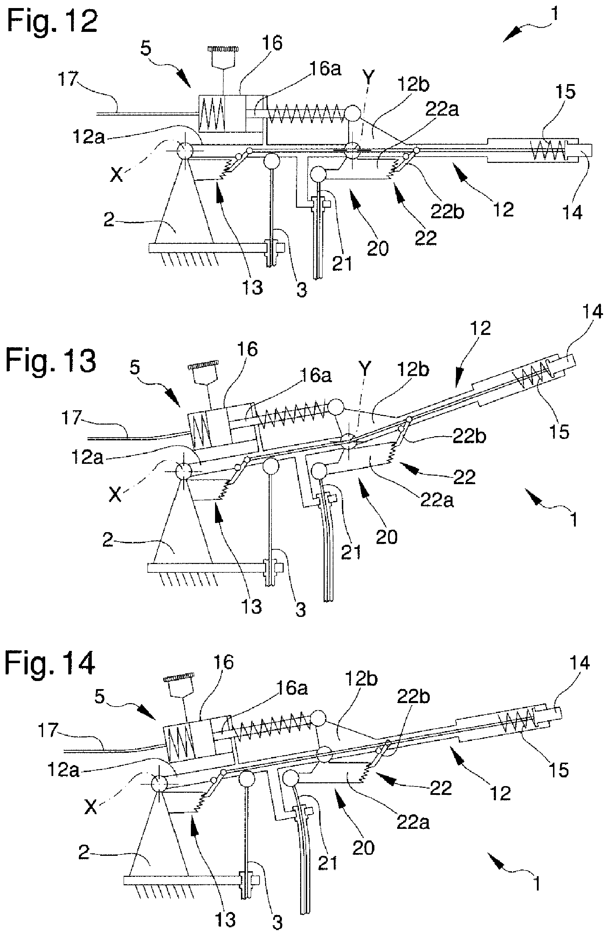

In particular, in the embodiments of Figures 12 to 19, the third cable 21 is associated with the first portion 12a and the third command means 20 also comprise activation means 22 which are able to bring the third cable 21 in traction as a result of the return of the second portion 12b from the braking position to the rest position. More in detail, the third cable 21 is in a neutral position with the first and second portions 12a and 12b in their respective rest positions and it is brought to a first working position as a result of the shift of the first portion 12a to a braking position, the latter applying a pulling action on the third cable 21. As a result of the shift of the second portion 12b from a braking position to its rest position, the activation means 22 are able to apply a further traction force on the third cable 21 causing its further shift from the first position to a second position wherein the third cable itself interacts with the multi-function valve 10 to reset the pressure in the additional line 11.

In the embodiment shown in the figures, the activation means 22 are the type of a ratchet lever and comprise at least a toothed element 22a hinged to the first portion 12a, e.g. around the second axis Y of rotation, and locked together with the third cable 21, and a lever element 22b associated with the second portion 12b and able to engage with the toothed element 22a. As a result of the rotation of the second portion 12b from the rest position to the braking position, the lever element 22b moves with respect to the toothed element 22a, whereas when the second portion 12b returns to the rest position, the lever element 22b engages with the teeth of the toothed element 22a by applying a force on it such as to cause its rotation around the relative axis and the consequent lifting of the third cable 21.

It has in practice been observed how the described invention achieves the intended objects and in particular the fact is underlined that the use of a command lever having two portions hinged together and associated with respective command means allows to manage with a single device the braking both in the parking and in the emergency phase.

In particular, the service brakes of the trailer are activated only when the operator grasps the second portion of the lever, i.e. in emergency conditions, whereas when the second portion is released, i.e. in the parking phase, the service brakes of the trailer are inactive and the automatic and/or parking brake of the trailer itself is activated.

## Claims

1. Braking device (1), **characterized in that** it comprises:
- a base body (2) associable with a chassis of a towing vehicle;
- first command means (3) which can be associated with at least a parking brake (4) of the towing vehicle and activatable to start the same;
- second command means (5) which can be connected to a braking valve (6) of a trailer and activatable to start the braking of the same;
- a lever (12) comprising at least a first portion (12a) hinged to said body (2) around a first axis (X) of rotation, associated with said first command means (3) and movable between a rest position and at least a braking position in which the first command means themselves are deactivated and activated, respectively, removable locking means (13) of said first portion (12a) being provided in said braking position, and at least a second portion (12b), that may be gripped by an operator, hinged to said first portion (12a) around a second axis (Y) of rotation, associated with said second command means (5) and movable between a rest position and at least a braking position in which said second command means (5) are deactivated and activated, respectively; as a result of the starting of said second portion (12b), the latter and said first portion (12a) move to a respective braking position by rotating around their respective axes (X, Y), whereas as a result of the release of said second portion (12b), the latter returns to its rest position and said first portion (12a) remains stationary in the braking position due to said locking means (13).

2. Braking device (1) according to claim 1 **characterized in that** said first command means (3) are of the mechanical type and comprise at least a first inextensible cable associated with said first portion (12a), the latter being able to bring said first cable in traction as a result of its rotation towards said braking position.

3. Braking device (1) according to claim 1 or 2, **characterized in that** said second command means (5) comprise at least a fluid-operated cylinder (16) and at least a piloting line (17) communicating on one side with the cylinder itself and on the other side with said braking valve (6), said second portion (12b) being able to move the piston (16a) of said cylinder (16) as a result of its rotation around said second axis (Y).

4. Braking device (1) according to claim 1 or 2, **characterized in that** said second command means (5) are of the mechanical type.

5. Braking device (1) according to claim 4, **characterized in that** said second command means (5) comprise a second inextensible cable (18) associated with said second portion (12b), the latter being able to bring said second cable (18) in traction as a result of its rotation towards said braking position, and **in that** it comprises elastic means (19) able to counteract the rotation of said second portion (12b) towards the braking position.

6. Braking device (1) according to one or more of the preceding claims, **characterized in that** it comprises third command means (20) connectable to a multi-function valve (10) which can be started to reset the pressure of a work fluid along an additional line (11) which operates on the parking and/or automatic brake of the trailer.

7. Braking device (1) according to claim 6, **characterized in that** said third command means (20) coincide with said first command means (3).

8. Braking device (1) according to claim 6, **characterized in that** said third command means (20) are associated with said first portion (12a) and are distinct from said first command means (3), said third command means activating as a result of the rotation of the first portion itself towards said braking position.

9. Braking device (1) according to claim 6, **characterized in that** said third command means (20) are associated with said first and with said second portions (12a, 12b) and are distinct from said first and from said second command means (3, 5), said third command means (20) activating as a result of the return of said second portion (12b) from a braking position to the rest position.

10. Braking device (1) according to claim 9, **characterized in that** said third command means (20) are of the mechanical type and comprise at least a third inextensible cable (21) associated with said first portion (12a), the shift of the latter from the rest position towards said braking position causing the traction of said third cable (21) and its shift from a neutral position towards a first position, and activation means (22) associated with at least said third cable (21) and with said second portion (12b) which are able to apply a further traction force on said third cable (21) as a result of the shift of the latter from a braking position towards the relative rest position so as to cause its further shift from the first position towards a second position in which said third cable (21) interacts with said multi-function valve (10) to reset the pressure along said additional line (11).

11. Braking device (1) according to claim 10, **characterized in that** said activation means (22) comprise at least a toothed element (22a) locked together with said third cable (21) and hinged to said first portion (12a) around a relative axis and comprise at least a lever element (22b) associated with said second portion, said lever element (22b) being movable with respect to said toothed element (22a) during the shift of said second portion (12b) from its rest position towards said braking position and being locked with respect to it during the return of the second portion itself towards the rest position so as to cause the rotation of said toothed element (22a) around the relative axis and the resulting pulling action on said third cable (21).

## Patentansprüche

1. Bremsvorrichtung (1), **dadurch gekennzeichnet, dass** sie umfasst:
- einen Grundkörper (2), der mit einem Fahrgestell eines Zugfahrzeugs verbunden werden kann;
- erste Befehlsmittel (3), die mindestens einer Feststellbremse (4) des Zugfahrzeugs zugeordnet werden können und zum Starten derselben aktivierbar sind;
- zweite Befehlsmittel (5), die mit einem Bremsventil (6) eines Anhängers verbunden und aktivierbar sind, um die Bremsung desselben zu starten;
- einen Hebel (12), der mindestens einen ersten Abschnitt (12a) umfasst, der an dem Körper (2) um eine erste Drehachse (X) angelenkt ist, den ersten Befehlsmitteln (3) zugeordnet ist und zwischen einer Ruheposition und mindestens einer Bremsposition beweglich ist, in der die ersten Befehlsmittel selbst deaktiviert bzw. aktiviert sind, wobei in der Bremsposition abnehmbare Verriegelungsmittel (13) des ersten Abschnitts (12a) vorgesehen sind, und mindestens einen zweiten Abschnitt (12b), der von einem Bediener gegriffen werden kann, der an dem ersten Abschnitt (12a) um eine zweite Drehachse (Y) angelenkt ist, den zweiten Befehlsmitteln (5) zugeordnet ist und zwischen einer Ruheposition und mindestens einer Bremsposition beweglich ist, in der die zweiten Befehlsmittel (5) deaktiviert bzw. aktiviert sind; wobei als Folge des Ingangsetzens des zweiten Abschnitts (12b), der letztere und der erste Abschnitt (12a) sich durch Drehen um ihre jeweiligen Achsen (X, Y) in eine jeweilige Bremsposition bewegen, wohingegen durch das Lösen des zweiten Abschnitts (12b) der letztere in seine Ruheposition zurückkehrt und der erste Abschnitt (12a) aufgrund der Verriegelungsmittel (13) stationär in der Bremsposition bleibt.

2. Bremsvorrichtung (1) nach Anspruch 1, **dadurch gekennzeichnet, dass** die ersten Befehlsmittel (3) vom mechanischen Typ sind und mindestens einen ersten undehnbaren Strang umfassen, der dem ersten Abschnitt (12a) zugeordnet ist, wobei der letztere in der Lage ist, den ersten Strang durch seine Drehung in Richtung der Bremsposition in Traktion zu bringen.

3. Bremsvorrichtung (1) nach Anspruch 1 oder 2, **dadurch gekennzeichnet, dass** die zweiten Befehlsmittel (5) mindestens einen fluidbetätigten Zylinder (16) und mindestens eine Steuerleitung (17) umfassen, die auf einer Seite mit dem Zylinder selbst und auf der anderen Seite mit dem Bremsventil (6) in Verbindung steht, wobei der zweite Abschnitt (12b) in der Lage ist, den Kolben (16a) des Zylinders (16) infolge seiner Drehung um die zweite Achse (Y) zu bewegen.

4. Bremsvorrichtung (1) nach Anspruch 1 oder 2, **dadurch gekennzeichnet, dass** die zweiten Befehlsmittel (5) vom mechanischen Typ sind.

5. Bremsvorrichtung (1) nach Anspruch 4, **dadurch gekennzeichnet, dass** die zweiten Befehlsmittel (5) einen zweiten undehnbaren Strang (18) umfassen, der dem zweiten Abschnitt (12b) zugeordnet ist, wobei der letztere in der Lage ist, den zweiten Strang (18) durch seine Drehung in Richtung der Bremsposition in Traktion zu bringen, und dass sie elastische Mittel (19) umfasst, die in der Lage sind, der Drehung des zweiten Abschnitts (12b) in Richtung der Bremsposition entgegenzuwirken.

6. Bremsvorrichtung (1) nach einem oder mehreren der vorstehenden Ansprüche, **dadurch gekennzeichnet, dass** sie dritte Befehlsmittel (20) umfasst, die mit einem Multifunktionsventil (10) verbindbar sind, das gestartet werden kann, um den Druck eines Arbeitsfluids entlang einer zusätzlichen Leitung (11) zurückzusetzen, die auf die Feststell- und/oder automatische Bremse des Anhängers wirkt.

7. Bremsvorrichtung (1) nach Anspruch 6, **dadurch gekennzeichnet, dass** die dritten Befehlsmittel (20) mit den ersten Befehlsmitteln (3) zusammenfallen.

8. Bremsvorrichtung (1) nach Anspruch 6, **dadurch gekennzeichnet, dass** die dritten Befehlsmittel (20) dem ersten Abschnitt (12a) zugeordnet sind und sich von den ersten Befehlsmitteln (3) unterscheiden, wobei die dritten Befehlsmittel infolge der Drehung des ersten Abschnitts selbst in Richtung der Bremsposition aktiviert werden.

9. Bremsvorrichtung (1) nach Anspruch 6, **dadurch gekennzeichnet, dass** die dritten Befehlsmittel (20) den ersten und den zweiten Abschnitten (12a, 12b) zugeordnet sind und sich von den ersten und von den zweiten Befehlsmitteln (3, 5) unterscheiden, wobei die dritten Befehlsmittel (20) infolge der Rückkehr des zweiten Abschnitts (12b) aus einer Bremsposition in die Ruheposition aktiviert werden.

10. Bremsvorrichtung (1) nach Anspruch 9, **dadurch gekennzeichnet, dass** die dritten Befehlsmittel (20) vom mechanischen Typ sind und mindestens einen dritten undehnbaren Strang (21) umfassen, der dem ersten Abschnitt (12a) zugeordnet ist, wobei die Verschiebung des letzteren von der Ruheposition in Richtung der Bremsposition die Traktion des dritten Strangs (21) und seine Verschiebung von einer neutralen Position in eine erste Position verursacht, und Aktivierungsmittel (22), die mindestens dem dritten Strang (21) und dem zweiten Abschnitt (12b) zugeordnet sind und die in der Lage sind, eine weitere Zugkraft auf den dritten Strang (21) infolge der Verschiebung des letzteren von einer Bremsposition in Richtung der relativen Ruheposition auszuüben, um dessen weitere Verschiebung von der ersten Position in Richtung einer zweiten Position zu bewirken, in der der dritte Strang (21) mit dem Multifunktionsventil (10) zusammenwirkt, um den Druck entlang der zusätzlichen Leitung (11) zurückzusetzen.

11. Bremsvorrichtung (1) nach Anspruch 10, **dadurch gekennzeichnet, dass** die Aktivierungsmittel (22) mindestens ein gezahntes Element (22a) umfassen, das mit dem dritten Strang (21) verbunden und an dem ersten Abschnitt (12a) um eine relative Achse angelenkt ist, und mindestens ein dem zweiten Abschnitt zugeordnetes Hebelelement (22b) umfassen, wobei das Hebelelement (22b) in Bezug auf das gezahnte Element (22a) während der Verschiebung des zweiten Abschnitts (12b) von seiner Ruheposition in Richtung der Bremsposition beweglich ist und in Bezug darauf verriegelt ist während der Rückkehr des zweiten Abschnitts selbst in Richtung der Ruheposition, um die Drehung des gezahnten Elements (22a) um die relative Achse und die daraus resultierende Zugwirkung auf den dritten Strang (21) zu bewirken.

## Revendications

1. Dispositif de freinage (1), **caractérisé en ce qu'**il comprend :
- un corps de base (2) associable à un châssis d'un véhicule de remorquage ;
- des premiers moyens de commande (3) qui peuvent être associés à au moins un frein de stationnement (4) du véhicule de remorquage et activables pour démarrer celui-ci ;
- des deuxièmes moyens de commande (5) qui peuvent être raccordés à une soupape de freinage (6) d'une remorque et activables pour démarrer le freinage de celle-ci ;
- un levier (12) comprenant au moins une première portion (12a) articulée sur ledit corps (2) autour d'un premier axe (X) de rotation, associé auxdits premiers moyens de commande (3) et mobile entre une position de repos et au moins une position de freinage dans laquelle les premiers moyens de commande eux-mêmes sont désactivés et activés, respectivement, des moyens de verrouillage (13) amovibles de ladite première portion (12a) étant prévus dans ladite position de freinage, et au moins une seconde portion (12b), qui peut être saisie par un opérateur, articulée sur ladite première portion (12a) autour d'un second axe (Y) de rotation, associé auxdits deuxièmes moyens de commande (5) et mobile entre une position de repos et au moins une position de freinage dans laquelle lesdits deuxièmes moyens de commande (5) sont désactivés et activés, respectivement ; suite au démarrage de ladite seconde portion (12b), cette dernière et ladite première portion (12a) se déplacent vers une position de freinage respective en tournant autour de leur axe (X, Y) respectif, tandis que suite au relâchement de ladite seconde portion (12b), cette dernière retourne à sa position de repos et ladite première portion (12a) reste immobile dans la position de freinage en raison desdits moyens de verrouillage (13).

2. Dispositif de freinage (1) selon la revendication 1, **caractérisé en ce que** lesdits premiers moyens de commande (3) sont du type mécanique et comprennent au moins un premier câble inextensible associé à ladite première portion (12a), cette dernière étant capable d'amener ledit premier câble en traction suite à sa rotation vers ladite position de freinage.

3. Dispositif de freinage (1) selon la revendication 1 ou 2, **caractérisé en ce que** lesdits deuxièmes moyens de commande (5) comprennent au moins un cylindre actionné par fluide (16) et au moins une conduite de pilotage (17) communiquant d'un côté avec le cylindre lui-même et de l'autre côté avec ladite soupape de freinage (6), ladite seconde portion (12b) étant capable de déplacer le piston (16a) dudit cylindre (16) suite à sa rotation autour dudit second axe (Y).

4. Dispositif de freinage (1) selon la revendication 1 ou 2, **caractérisé en ce que** lesdits deuxièmes moyens de commande (5) sont du type mécanique.

5. Dispositif de freinage (1) selon la revendication 4, **caractérisé en ce que** lesdits deuxièmes moyens de commande (5) comprennent un deuxième câble (18) inextensible associé à ladite seconde portion (12b), cette dernière étant capable d'amener ledit deuxième câble (18) en traction suite à sa rotation vers ladite position de freinage, et **en ce qu'**il comprend des moyens élastiques (19) capables de contrer la rotation de ladite seconde portion (12b) vers la position de freinage.

6. Dispositif de freinage (1) selon une ou plusieurs des revendications précédentes, **caractérisé en ce qu'**il comprend des troisièmes moyens de commande (20) raccordables à une soupape multifonction (10) qui peut être démarrée pour réinitialiser la pression d'un fluide actif le long d'une conduite supplémentaire (11) qui fonctionne sur le frein de stationnement et/ou automatique de la remorque.

7. Dispositif de freinage (1) selon la revendication 6, **caractérisé en ce que** lesdits troisièmes moyens de commande (20) coïncident avec lesdits premiers moyens de commande (3).

8. Dispositif de freinage (1) selon la revendication 6, **caractérisé en ce que** lesdits troisièmes moyens de commande (20) sont associés à ladite première portion (12a) et sont distincts desdits premiers moyens de commande (3), lesdits troisièmes moyens de commande s'activant suite à la rotation de la première portion elle-même vers ladite position de freinage.

9. Dispositif de freinage (1) selon la revendication 6, **caractérisé en ce que** lesdits troisièmes moyens de commande (20) sont associés à ladite première et à ladite seconde portion (12a, 12b) et sont distincts desdits premiers et desdits deuxièmes moyens de commande (3, 5), lesdits troisièmes moyens de commande (20) s'activant suite au retour de ladite seconde portion (12b) d'une position de freinage à la position de repos.

10. Dispositif de freinage (1) selon la revendication 9, **caractérisé en ce que** lesdits troisièmes moyens de commande (20) sont du type mécanique et comprennent au moins un troisième câble (21) inextensible associé à ladite première portion (12a), le décalage de cette dernière de la position de repos vers ladite position de freinage provoquant la traction dudit troisième câble (21) et son décalage d'une position neutre vers une première position, et des moyens d'activation (22) associés au moins audit troisième câble (21) et à ladite seconde portion (12b) qui sont capables d'appliquer une force de traction supplémentaire sur ledit troisième câble (21) suite au décalage de cette dernière d'une position de freinage vers la position de repos relative de façon à provoquer son décalage supplémentaire de la première position vers une seconde position dans laquelle ledit troisième câble (21) interagit avec ladite soupape multifonction (10) pour réinitialiser la pression le long de ladite conduite supplémentaire (11).

11. Dispositif de freinage (1) selon la revendication 10, **caractérisé en ce que** lesdits moyens d'activation (22) comprennent au moins un élément denté (22a) verrouillé avec ledit troisième câble (21) et articulé sur ladite première portion (12a) autour d'un axe relatif et comprennent au moins un élément de levier (22b) associé à ladite seconde portion, ledit élément de levier (22b) étant mobile par rapport audit élément denté (22a) pendant le décalage de ladite seconde portion (12b) de sa position de repos vers ladite position de freinage et étant verrouillé par rapport à celui-ci pendant le retour de la seconde portion elle-même vers la position de repos de façon à provoquer la rotation dudit élément denté (22a) autour de l'axe relatif et l'action de traction résultante sur ledit troisième câble (21).
